# EUROPÄISCHE PATENTSCHRIFT

(11) **EP 2 789 043 B1**
(45) Veröffentlichungstag und Bekanntmachung des Hinweises auf die Patenterteilung: **04.05.2016**
(21) Anmeldenummer: 12770424.5
(22) Anmeldetag: 02.10.2012
(51) Int. Cl.: H01M 10/42, H01M 10/48, H01M 2/26, H01M 2/20

(54) **BATTERIE MIT EINER ANZAHL VON ELEKTRISCH MITEINANDER VERSCHALTETEN EINZELZELLEN UND VERFAHREN ZUR WARTUNG, REPARATUR UND/ODER OPTIMIERUNG EINER SOLCHEN BATTERIE**
BATTERY COMPRISING A NUMBER OF INDIVIDUAL CELLS CONNECTED ELECTRICALLY TO ONE ANOTHER AND METHOD FOR MAINTAINING, REPAIRING AND/OR OPTIMIZING SUCH A BATTERY
BATTERIE COMPRENANT UNE PLURALITÉ D'ÉLÉMENTS INDIVIDUELS, INTERCONNECTÉS ÉLECTRIQUEMENT ENTRE EUX, ET PROCÉDÉ POUR L'ENTRETIEN, LA RÉPARATION ET/OU L'OPTIMISATION D'UNE TELLE BATTERIE

(30) Priorität: 07.12.2011 DE 102011120470
(43) Veröffentlichungstag der Anmeldung: 15.10.2014
(73) Patentinhaber: Daimler AG, 70327 Stuttgart (DE)
(72) Erfinder: BACHMANN, Norbert, 73265 Dettingen (DE); HÖFER, Tillmann, 73240 Wendlingen (DE); KAUFMANN, Rainer, 70597 Stuttgart (DE); MEINTSCHEL, Jens, 02994 Bernsdorf (DE); REINHARDT, Rudolf, 73732 Esslingen (DE); SCHRÖTER, Dirk, 71364 Winnenden (DE); STEINMETZ, Heiko, 73275 Ohmden (DE)
(74) Vertreter: JENSEN & SON
(86) Internationale Anmeldenummer: PCT/EP2012/004134
(87) Internationale Veröffentlichungsnummer: WO 2013/083213

(56) Entgegenhaltungen:
- WO-A1-2008/128764
- WO-A2-2011/123808
- JP-A- 8 064 191
- US-A1- 2011 236 728

## Beschreibung

Die Erfindung betrifft eine Batterie, welche eine Anzahl von seriell und/oder parallel miteinander verschalteten Einzelzellen, deren elektrische Pole zur elektrischen Verschaltung direkt oder mittels Zellverbindern form- und/oder stoffschlüssig miteinander verbunden sind, und eine Batterieüberwachungseinheit umfasst, wobei die Batterieüberwachungseinheit mit den elektrischen Polen und/oder mit den Zellverbindern form- und/oder stoffschlüssig verbunden ist. Darüber hinaus betrifft die Erfindung ein Verfahren zur Wartung, Reparatur und/oder Optimierung einer solchen Batterie.

Aus dem Stand der Technik sind allgemein elektrochemische Hochvolt-Batterien für Fahrzeuganwendungen bekannt, welche aus mehreren elektrisch parallel und/oder in Reihe verschalteten Einzelzellen gebildet sind. Zur elektrischen Reihenschalten der Einzelzellen sind deren elektrischen Pole direkt über einen elektrisch leitfähigen Zellverbinder verbunden. Darüber hinaus sind die elektrischen Pole der jeweiligen Einzelzelle und/oder die Zellverbinder mit einer Vorrichtung zur Zellspannungsmessung und zum Ladungsausgleich, dem so genannten Balancing elektrisch verbunden. Die Vorrichtung zur Zellspannungsmessung und zum Ladungsausgleich ist in der Regel für mehrere Einzelzellen in einer Batterieelektronik zusammengefasst. Dabei erfolgt eine Kontaktierung der elektrischen Pole der Einzelzellen mit den Zellverbindern und der elektrischen Pole und/oder der Zellverbinder mit der Vorrichtung zur Zellspannungsmessung und zum Ladungsausgleich mittels stoffschlüssiger Verfahren, wie z. B. Laserschweißung, Widerstandspressschweißung, Ultraschallschweißung und/oder mittels formschlüssiger Verfahren, wie beispielsweise Toxen/Clinchen, Crimpen. Diese hergestellten stoffschlüssigen und/oder formschlüssigen Verbindungen sichern die jeweilige Funktion über die Batterielebensdauer auch bei hoher mechanischer, korrosiver und/oder thermischer Belastung, wobei die jeweilige Verbindung nicht zerstörungsfrei lösbar ist.

Der Erfindung liegt die Aufgabe zugrunde, eine gegenüber dem Stand der Technik verbesserte Batterie mit einer Anzahl von elektrisch miteinander verschalteten Einzelzellen und ein Verfahren zur Wartung, Reparatur und/oder Optimierung einer solchen Batterie anzugeben.

Die Aufgabe wird erfindungsgemäß hinsichtlich der Batterie durch die in Anspruch 1 und hinsichtlich des Verfahrens durch die in Anspruch 7 angegebenen Merkmale gelöst.

Vorteilhafte Ausgestaltungen der Erfindung sind Gegenstand der Unteransprüche.

Eine Batterie umfasst eine Anzahl von seriell und/oder parallel miteinander verschalteten Einzelzellen, wobei deren elektrische Pole zur elektrischen Verschaltung direkt oder mittels Zellverbindern form- und/oder stoffschlüssig miteinander verbunden sind, und eine Batterieüberwachungseinheit, welche mit den elektrischen Polen und/oder mit den Zellverbindern form- und/oder stoffschlüssig verbunden ist. Erfindungsgemäß weisen die elektrischen Pole der Einzelzelle jeweils redundante Kontaktierbereiche zur form- und/oder stoffschlüssigen Verbindung auf, wobei jeweils nur einer der zueinander redundanten Kontaktierbereiche form- und/oder stoffschlüssig verbunden ist.

Dadurch, dass die elektrischen Pole zueinander redundante Kontaktierbereiche aufweisen bzw., ist es in besonders vorteilhafter Weise möglich, die jeweilige Komponente trotz Zerstörung des Kontaktierbereiches, über welchen die Komponenten form- und/oder stoffschlüssig miteinander verbunden sind, nochmals form- und/oder stoffschlüssig zu verbinden. Mittels der zueinander redundanten Kontaktierbereiche ist es realisierbar, beispielsweise Komponenten der Batterie für eine Reparatur, eine Wartung und/oder einen Austausch zu entnehmen, wodurch der Kontaktierbereich der formund/oder stoffschlüssigen Verbindung zerstört wird und die Komponente oder eine Ersatzkomponente anzuordnen und mittels mit einem zu dem zerstörten Kontaktierbereich redundanten Kontaktierbereich form-und/oder stoffschlüssig zu verbinden.

Darüber hinaus ist es mittels der zueinander redundanten Kontaktierbereiche möglich, sofern bei einer Herstellung einer Fügeverbindung zwischen Komponenten der Batterie bei einer Erstmontage feststellbar ist, dass die Fügeverbindung eine mangelhafte Qualität aufweist, einen weiteren Kontaktierbereich zur form- und/oder stoffschlüssigen Verbindung der Komponenten zu nutzen, ohne dass ein Austausch der Komponente oder der Komponenten erforderlich ist. Dadurch können in Gewinn bringender Weise Kosten und Zeit bei der Herstellung der Batterie verringert werden.

Besonders bevorzugt sind die jeweiligen redundanten Kontaktierbereiche separiert und/oder separierbar ausgebildet, so dass ein durch Zerstörung der form- und/oder stoffschlüssigen Verbindung unbrauchbar gemachter Kontaktierbereich entfernt werden kann. Dazu sind die Kontaktbereiche derart separiert ausgebildet, dass das Entfernen ohne großen Aufwand und/oder ohne aufwändig zu bedienendes Werkzeug durchführbar ist.

Der jeweilige elektrische Pol der Einzelzelle weist mehrere zueinander redundante Kontaktierbereiche auf, welche als zungenartige Abschnitte ausgebildet sind. Dabei bildet ein zungenartiger Abschnitt des jeweiligen elektrischen Pols der Einzelzelle vorteilhaft einen Schweißpunkt zur stoffschlüssigen Befestigung des elektrischen Pols an einem elektrischen Pol einer benachbarten Einzelzelle oder zur stoffschlüssigen Befestigung an einem Zellverbinder.

Um vorteilhaft eine vergleichsweise einfache Entfernung eines durch Beschädigung unbrauchbaren als zungenartigen Abschnitt ausgebildeten Kontaktierbereiches zu ermöglichen, weisen die jeweiligen zungenartigen Abschnitte eine Sollbruchstelle auf, so dass der unbrauchbare zungenartige Abschnitt als Kontaktierbereich vor einem erneuten form- und/oder stoffschlüssigen Verbinden entfernt werden kann.

In einer vorteilhaften Ausführungsform weist der jeweilige elektrische Pol einer Einzelzelle eine derartige Breite auf, dass zumindest zwei zueinander redundante Kontaktierbereiche nebeneinander ausgebildet sind, wobei in jeweils einem Kontaktierbereich ein Zellverbinder form- und/oder stoffschlüssig befestigbar ist. Mittels der Ausbildung der zwei zueinander redundanten Kontaktierbereiche ist die Einzelzelle zweimal mit einer weiteren Komponente form- und/oder stoffschlüssig verbindbar. D. h., bei Herstellung der Batterie ist der jeweilige elektrische Pol der Einzelzelle mittels eines Kontaktierbereiches mit einer weiteren Komponente der Batterie form- und/oder stoffschlüssig verbindbar, wobei sofern dieser Kontaktierbereich durch Zerstörung der Verbindung unbrauchbar ist, der weitere Kontaktierbereich nutzbar ist, um die Einzelzelle form- und/oder stoffschlüssig, insbesondere mit einem Zellverbinder zu verbinden.

Vorzugsweise ist des Weiteren vorgesehen, dass der jeweilige Zellverbinder, mittels welchem benachbarte Einzelzellen elektrisch miteinander verbindbar sind, eine Sollbruchstelle aufweist. Die Sollbruchstelle kann in vorteilhafter Weise dazu genutzt werden, den Zellverbinder zum Ausbau einer Einzelzelle, an deren Pol der Zellverbinder geschweißt ist, zu trennen, um die Einzelzelle ausbauen zu können.

Alternativ oder zusätzlich ist der Zellverbinder aus einem Material gebildet, welches eine vorgegebene Sprödigkeit aufweist, so dass der Zellverbinder bei Einwirken einer vorgegebenen Kraft zertrennbar ist, so dass beispielsweise die Einzelzelle, an welcher der Zellverbinder form- und/oder stoffschlüssig befestigt ist, ausbaubar ist.

In einer weiteren vorteilhaften Ausführungsform weist ein an der Batterieüberwachungseinheit angeordnetes Anschlusselement zur Verbindung mit einem Zellverbinder und/oder einem elektrischen Pol der Einzelzelle zumindest zwei nebeneinander angeordnete zueinander redundante Kontaktierbereiche auf, welche mittels einer Sollbruchstelle voneinander getrennt sind. Somit ist es vorteilhaft möglich, die Batterieüberwachungseinheit von dem elektrischen Pol und/oder dem Zellverbinder zu trennen und den weiteren Kontaktierbereich für eine erneute form- und/oder stoffschlüssige Verbindung an einem elektrischen Pol einer Einzelzelle und/oder an einem Zellverbinder zu nutzen.

Bevorzugt sind die zueinander redundanten Kontaktierbereiche an vergleichsweise kostenintensive Komponenten ausgebildet, so dass diese Komponenten mehrfach form-und/oder stoffschlüssig mit weiteren Komponenten zu verbinden.

Darüber hinaus betrifft die Erfindung ein Verfahren zur Wartung, Reparatur und/oder Optimierung einer Batterie nach einem der Ansprüche 1-6 welche als Komponenten eine Anzahl von seriell und/oder parallel miteinander verschalteten Einzelzellen, deren elektrische Pole zur elektrischen Verschaltung direkt oder mittels Zellverbindern form- und/oder stoffschlüssig miteinander verbunden sind, und eine Batterieüberwachungseinheit, welche mit den elektrischen Polen und/oder mit den Zellverbindern form- und/oder stoffschlüssig verbunden ist, aufweist. Erfindungsgemäß wird zum Austausch einer Komponente die form- und/oder stoffschlüssige Verbindung des Kontaktierbereiches der nicht auszutauschenden Komponente, über welche die auszutauschende und die nicht auszutauschende Komponente elektrisch miteinander kontaktiert sind, durch Zerstörung getrennt und eine Ersatzkomponente wird mit einem zu dem zerstörten Kontaktierbereich redundanten Kontaktierbereich form- und/oder stoffschlüssig verbunden. Ferner wird eine fehlerhafte form- und/oder stoffschlüssige Verbindung zweier Kontaktierbereiche durch eine form-und/oder stoffschlüssige Verbindung zweier dazu redundanter Kontaktierbereiche ersetzt.

Dabei wird die Ersatzkomponente mit dem redundanten Kontaktierbereich mittels Schweißens, Toxens, Clinchens, Crimpens und/oder Nietens stoff- und/oder formschlüssig verbunden.

Ausführungsbeispiele der Erfindung werden im Folgenden anhand von Zeichnungen näher erläutert.

Dabei zeigen:
- Fig. 1: schematisch in perspektivischer Ansicht einen Zellverbund einer Batterie mit als Pouchzellen ausgeführten Einzelzellen,
- Fig. 2: schematisch in perspektivischer Ansicht den Zellverbund in einer teilweisen Explosionsdarstellung,
- Fig. 3: schematisch zwei mittels Zellverbindern elektrisch miteinander verschaltete Einzelzellen und einen Halterahmen,
- Fig. 4: schematisch in perspektivischer Ansicht die Einzelzellen, einen Zellverbinder, den Halterahmen und ein Ultraschall-Schweißwerkzeug in perspektivischer Ansicht,
- Fig. 5: schematisch einen vergrößerten Ausschnitt einer Schnittdarstellung der zwei Einzelzellen beim Verbinden ihrer elektrischen Pole mittels des Schweißwerkzeuges,
- Fig. 6: schematisch in perspektivischer Ansicht einen vergrößerten Ausschnitt eines elektrischen Pols einer Einzelzelle mit mehreren zueinander redundanten Kontaktierbereichen,
- Fig. 7: schematisch den vergrößerten Ausschnitt in einer weiteren Ansicht,
- Fig. 8: schematisch in perspektivischer Ansicht einen vergrößerten Ausschnitt eines elektrischen Pols einer Einzelzelle mit befestigtem Zellverbinder,
- Fig. 9: schematisch den vergrößerten Ausschnitt gemäß Figur 8 in einer weiteren Ansicht,
- Fig. 10: schematisch einen vergrößerten Ausschnitt eines elektrischen Pols einer Einzelzelle mit entferntem Kontaktierbereich in perspektivischer Ansicht,
- Fig. 11: schematisch den vergrößerten Ausschnitt gemäß Figur 10 in einer weiteren Ansicht,
- Fig. 12: schematisch einen vergrößerten Ausschnitt der Einzelzelle mit einem an einem weiteren Kontaktierbereich befestigten Zellverbinder,
- Fig. 13: schematisch den vergrößerten Ausschnitt gemäß Figur 12 in einer weiteren Ansicht,
- Fig. 14: schematisch in perspektivischer Ansicht einen aus bipolaren Rahmenflachzellen gebildeten Zellverbund, wobei die Einzelzelle mehrere Kontaktierbereiche aufweisen,
- Fig. 15: schematisch in perspektivischer Ansicht den Zellverbund in einer teilweisen Explosionsdarstellung,
- Fig. 16: schematisch eine als bipolare Rahmenflachzelle ausgeführte Einzelzelle mit mehreren Kontaktierbereichen,
- Fig. 17: schematisch einen vergrößerten Ausschnitt des Zellverbundes in einer perspektivischen Ansicht,
- Fig. 18: schematisch die Einzelzelle nach Entfernen eines Kontaktierbereiches,
- Fig. 19: schematisch einen vergrößerten Ausschnitt eines Zellverbundes mit Einzelzellen nach Entfernen eines Kontaktierbereiches,
- Fig. 20: schematisch in perspektivischer Ansicht einen Zellverbund mit Einzellen, welche einen elektrischen Pol mit mehreren Kontaktierbereichen aufweisen, welche mittels Zellverbindern mit mehreren Kontaktierbereichen elektrisch verschaltet sind,
- Fig. 21: schematisch den Zellverbund in einer Draufsicht,
- Fig. 22: schematisch den Zellverbund nach einem Austausch einer Einzelzelle,
- Fig. 23: schematisch den Zellverbund gemäß Figur 20 in einer Draufsicht,
- Fig. 24: schematisch den Zellverbund gemäß Figur 1 mit einer Batterieüberwachungseinheit in einer perspektivischen Ansicht,
- Fig. 25: schematisch die Batterieüberwachungseinheit in einer perspektivischen Ansicht,
- Fig. 26: schematisch in perspektivischer Ansicht einen vergrößerten Ausschnitt des Zellverbundes mit befestigter Batterieüberwachungseinheit,
- Fig. 27: schematisch in perspektivischer Ansicht einen weiteren vergrößerten Ausschnitt der an dem Zellverbund befestigten Batterieüberwachungseinheit,
- Fig. 28: schematisch in perspektivischer Ansicht die Zellüberwachungseinheit mit Anschlusselementen nach Entfernen eines Kontaktierbereiches,
- Fig. 29: schematisch in perspektivischer Ansicht einen vergrößerten Ausschnitt der mittels eines weiteren Kontaktierbereiches an dem Zellverbund befestigten Batterieüberwachungseinheit und
- Fig. 30: schematisch in einer perspektivischen Ansicht einen vergrößerten Ausschnitt eines Anschlusselementes der Batterieüberwachungseinheit bei Herstellung einer Verbindung.

Einander entsprechende Teile sind in allen Figuren mit den gleichen Bezugszeichen versehen.

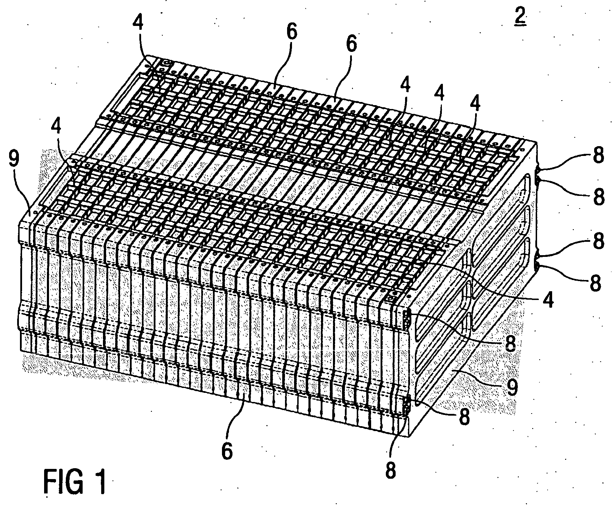

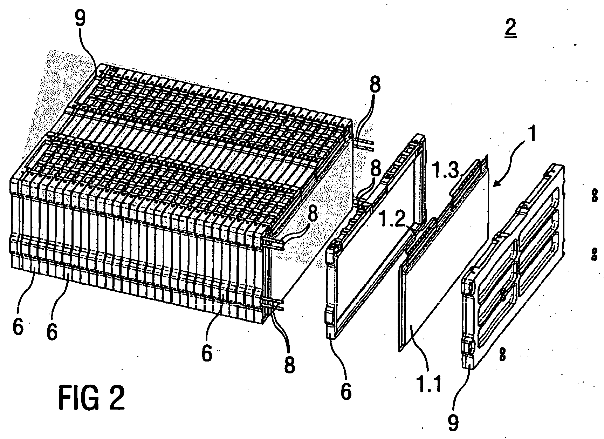

In den Figuren 1 und 2 ist ein aus einer Mehrzahl von als Pouchzellen ausgeführten Einzelzellen 1 gebildeter Zellverbund 2 dargestellt. Dabei ist zumindest eine Einzelzelle 1 u. a. in den Figuren 2, 3 und 4 näher dargestellt.

Der Zellverbund 2 ist Bestandteil einer Batterie, welche insbesondere eine Fahrzeugbatterie für ein Elektrofahrzeug, ein Hybridfahrzeug oder ein mit Brennstoffzellen betriebenes Fahrzeug ist. Dabei ist die Batterie eine Traktionsbatterie eines solchen Fahrzeuges.

Die Einzelzellen 1, aus welchen der Zellverbund gebildet ist, sind Pouchzellen, was heißt, dass die Einzelzellen 1 eine Kunststoffhülle 1.1 aufweisen, in welcher eine Elektrodenfolienanordnung 3 in Form eines Elektrodenfolienstapels oder eines Elektrodenfolienwickels angeordnet ist. Eine jede Elektrodenfolienanordnung weist beschichtete Anodenfolien und Kathodenfolien als Elektrodenfolien auf, die mittels Separatorfolien voneinander getrennt sind.

An einem Randbereich der Elektrodenfolienanordnung 3 sind Elektrodenfolien einer Polarität abschnittsweise aus der Elektrodenfolienanordnung 3 herausgeführt und als Polkontakt 3.1 miteinander verbunden. Ein jeweiliger Polkontakt 3.1 ist mit einem Blechteil zur Bildung eines elektrischen Pols 1.2, 1.3 aus der Kunststoffhülle 1.1 herausgeführt.

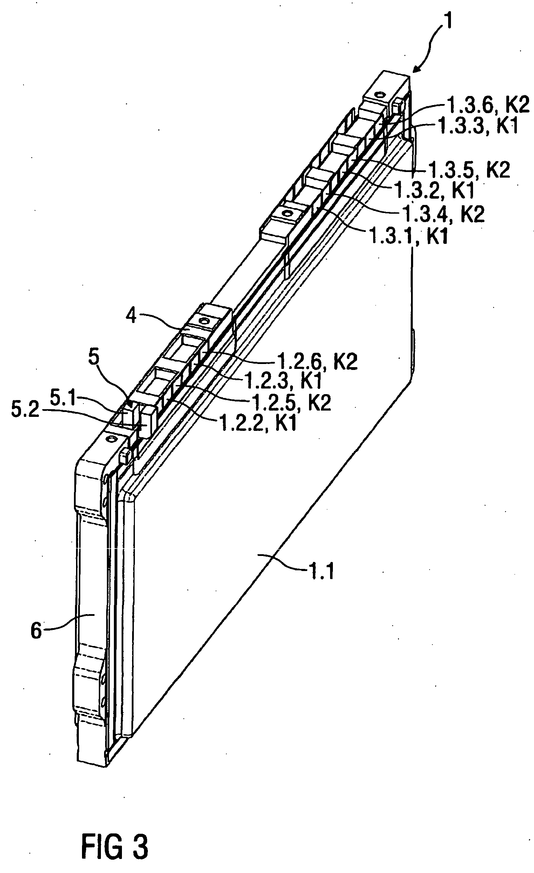

Die Einzelzellen 1 des Zellverbundes 2 sind elektrisch seriell miteinander verschaltet, wobei die elektrischen Pole 1.2, 1.3 der Einzelzelle 1 hierzu mittels jeweils eines Zellverbinders 4 mit den elektrischen Polen 1.2, 1.3 einer benachbarten Einzelzelle 1 verbunden sind. Die elektrischen Pole 1.2, 1.3 der jeweiligen Einzelzelle 1 sind mittels Ultraschallschweißens mit dem Zellverbinder 4 verbunden, wobei ein Ultraschallschweißwerkzeug 5 zur stoffschlüssigen Verbindung in den Figur 3, 4 und 5 näher gezeigt ist.

Erfindungsgemäß weist der jeweilige elektrische Pol 1.2, 1.3 der Einzelzellen eine Mehrzahl von Kontaktierbereichen K1, K2 auf, welche zueinander redundant sind. Dabei sind die Kontaktierbereiche K1, K2 als zungenartige

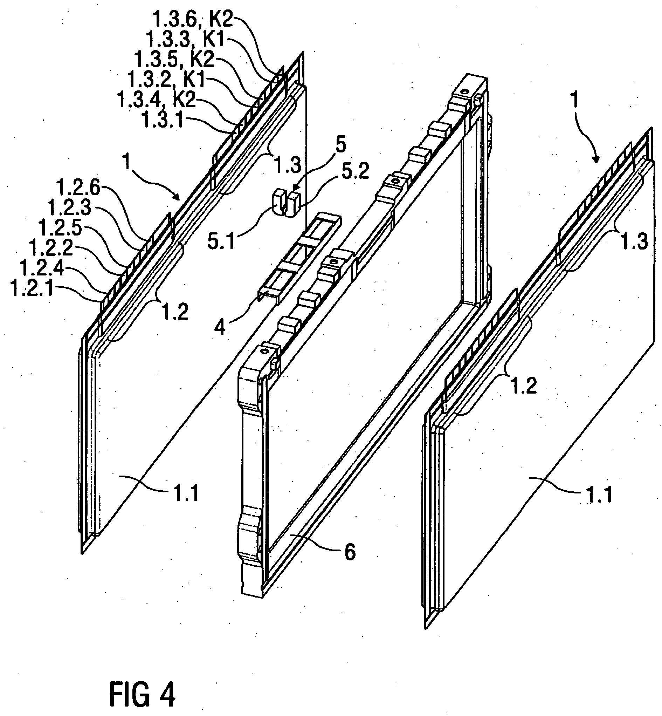

Abschnitte 1.2.1 bis 1.2.6 und 1.3.1 bis 1.3.6 die voneinander separiert ausgebildet sind, an dem jeweiligen elektrischen Pol 1.2, 1.3 ausgebildet. Einem ersten Kontaktierbereich K1 sind drei zungenartige Abschnitte 1.2.1 bis 1.2.3 und 1.3.1 bis 1.3.3 und einem zweiten Kontaktierbereich K2 drei weitere zungenartige Abschnitte 1.2.4 bis 1.2.6 und 1.3.4 bis 1.3.6 zugeordnet, was in den Figuren 3 und 4 näher dargestellt ist.

Der Zellverbinder 4 ist an einem Halterahmen 6 angeordnet oder ausgebildet, wobei jeweils eine Einzelzelle 1 an einer Seite des Halterahmens 6 angeordnet ist, und die elektrischen Pole 1.2, 1.3 der benachbarten Einzelzellen 1 mittels eihes Zellverbinders 4 elektrisch miteinander verschaltet sind. Bevorzugt ist der Halterahmen 6 aus einem Kunststoff gebildet.

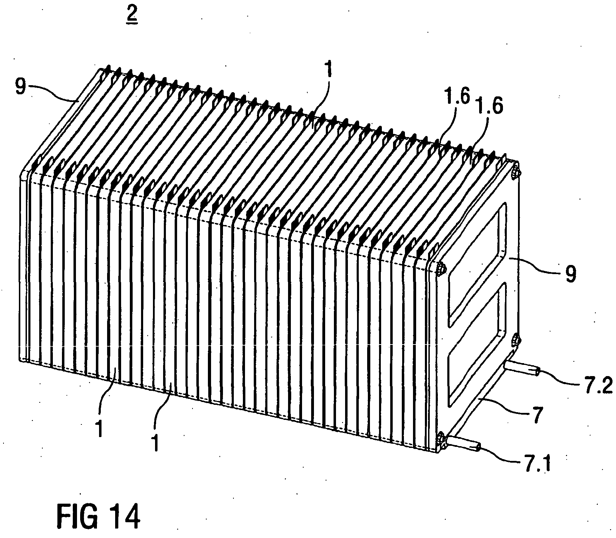

Ist vorgesehen, den Zellverbund 2 mittels einer in Figur 14 dargestellten Wärmeleitplatte 7 zu temperieren, bilden die Zellverbinder 4 einen Anbindungspunkt zwischen den Einzelzellen 1 und der Wärmeleitplatte 7. Dadurch, dass die Zellverbinder 4 stoffschlüssig mit den elektrischen Polen 1.2, 1.3 der jeweiligen Einzelzelle 1 verbunden sind, sind die Zellverbinder 4 thermisch mit einem Zellinneren gekoppelt, so dass die Zellverbinder 4 zusätzlich als Wärmeleitelement dienen. Zwischen den Zellverbindern 4 und der Wärmeleitplatte 7 ist eine nicht näher dargestellte Wärmeleitfolie zur elektrischen Isolation der Wärmeleitplatte 7 gegenüber den Zellverbindern 4 angeordnet.

Zur axialen Verpressung des Zellverbundes 2 sind Zuganker 8 vorgesehen, welche durch stirnseitig an dem Zellverbund 2 angeordnete Druckplatten 9 und durch Aussparungen in Eckbereichen des jeweiligen Halterahmens 6 geführt sind.

In Figur 3 sind zwei beidseitig an einem Halterahmen 6 angeordnete Einzelzellen 1 in einer perspektivischen Ansicht dargestellt. Zusätzlich zeigt die Figur 3 das Ultraschallschweißwerkzeug 5, mittels welchen die elektrischen Pole 1.2, 1.3 mittels eines Kontaktierbereiches K1, K2 mit den Zellverbindern 4 verbindbar sind.

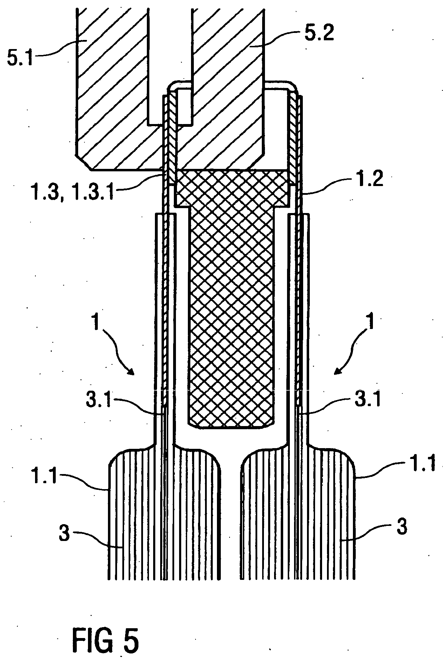

Das Ultraschallschweißwerkzeug 5 weist eine bewegbare Sonotrode 5.1 und einen feststehenden Amboss 5.2 auf, wobei der Schritt der stoffschlüssigen Verbindung mittels des Ultraschallschweißwerkzeuges 5 in Figur 5 näher dargestellt ist.

Bei Herstellung der Einzelzelle 1 werden die elektrischen Pole 1.2, 1.3 so ausgebildet, dass diese in die zwei Kontaktierbereiche K1, K2 in Form der jeweiligen zungenartigen Abschnitte 1.2.1 bis 1.2.3 und 1.3.1 bis 1.3.3 sowie 1.2.4 bis 1.2.6 und 1.3.4 bis 1.3.6 unterteilt sind.

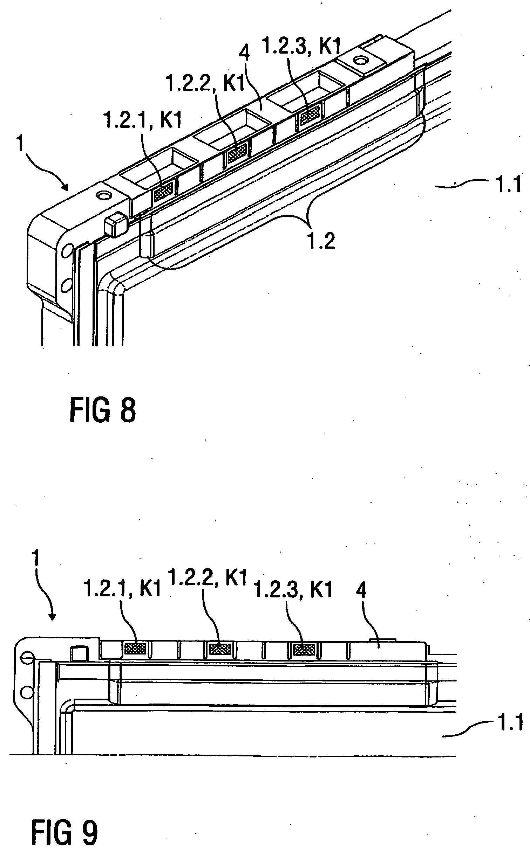

Ist die jeweilige Einzelzelle 1 Bestandteil eines Zellverbundes 2, so wird der jeweilige elektrisch Pol 1.2, 1.3 der Einzelzelle 1 über jeweils drei zungenartige . Abschnitte 1.2.1 bis 1.2.3 und 1.3.1 und 1.3.3 als ersten Kontaktierbereich K1 mit dem Zellverbinder 4 stoffschlüssig verbunden, wie in der Figur 8 näher dargestellt ist. Vorzugsweise bilden die zungenartigen Abschnitte 1.2.1 bis 1.2.6 und 1.3.1 bis 1.3.6 als Kontaktierbereiche K1, K2 einen Schweißpunkt zur stoffschlüssigen Verbindung.

Figur 4 zeigt den Halterahmen 6, die zwei Einzelzellen 1, einen an einem elektrischen ersten Pol 1.2 angeordneten Zellverbinder 4 und das Ultraschallschweißwerkzeug 5 in einer Explosionsdarstellung, wobei in Figur 5 eine Schnittdarstellung eines oberen Bereiches von zwei Einzelzellen 1 bei Herstellung der stoffschlüssigen Verbindung zwischen einem Kontaktierbereich K1, K2 und dem Zellverbinder 4 dargestellt ist. Der Zellverbinder 4 wird auf den Halterahmen 6 aufgesetzt und über die zungenartigen Abschnitte 1.2.1 bis 1.2.3 als ersten Kontaktierbereich K1 mit dem elektrischen ersten Pol 1.2 verbunden.

Wie oben beschrieben, besteht das Ultraschallschweißwerkzeug 5 aus einer hochfrequent bewegbaren Sonotrode 5.1 und einem feststehenden Amboss 5.2, wobei zur stoffschlüssigen Verbindung die zungenartigen Abschnitte 1.2.1 bis 1.2.3 des ersten Kontaktierbereiches K1 des elektrischen ersten Pols 1.2 und die zungenartigen Abschnitte 1.3.1 bis 1.3.3 eines elektrischen zweiten Pols 1.3 der Einzelzelle 1 und der Zellverbinder 4 zwischen der Sonotrode 5.1 und dem Amboss 5.2 oberhalb des Halterahmens 6 angeordnet ist. Hierzu ist die Sonotrode 5.1 in eine Tasche des Zellverbinders 4 einführbar und verbindet diesen stoffschlüssig mit einem ersten zungenartigen Abschnitt 1.3.1 des zweiten elektrischen Pols 1.2, wodurch eine Schweißverbindung hergestellt ist.

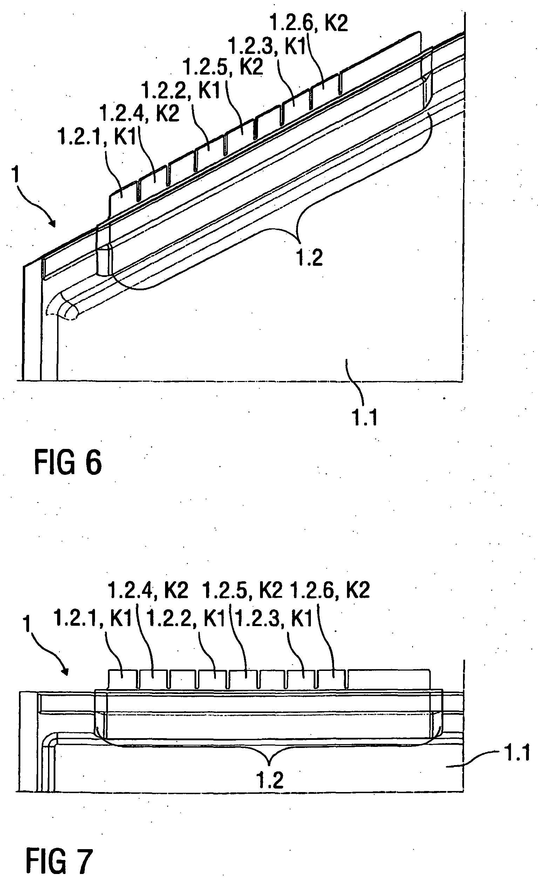

Die Figuren 6 und 7 zeigen jeweils eine Ansicht des ersten elektrischen Pols 1.2 einer als Pouchzelle ausgeführten Einzelzelle 1.

Der erste elektrische Pol 1.2 ist in die zwei Kontaktierbereiche K1, K2 unterteilt, wobei sechs zungenartige Abschnitte als Kontaktierbereiche vorgesehen sind.

Dabei bilden ein erster, ein vierter und ein siebenter zungenartiger Abschnitt 1.2.1 bis 1.2.3 den ersten Kontaktierbereich K1 und ein zweiter, ein fünfter und ein achter zungenartiger Abschnitt 1.2.4 bis 1.2.6 bilden den zweiten Kontaktierbereich K2 des ersten elektrischen Pols 1.2 der Einzelzelle 1.

Die zwischen den zungenartigen Abschnitten 1.2.1 bis 1.2.6 der Kontaktierbereiche K1, K2 ausgebildeten Abschnitte des ersten elektrischen Pols 1.2 liegen an ausgebildeten Stegen des Zellverbinders 4 an und bilden keinen weiteren Kontaktierbereich, wie in den Figuren 8 und 9 näher gezeigt ist.

Die Figuren 8 und 9 zeigen jeweils eine Ansicht eines vergrößerten Ausschnittes des ersten elektrischen Pols 1.2. welcher über seine ersten Kontaktierbereich K1 mit dem Zellverbinder 4 stoffschlüssig verbunden ist.

Wird der Zellverbund 2 demontiert, kann die stoffschlüssige Verbindung in dem ersten Kontaktierbereich K1 nur durch Zerstörung getrennt werden, wodurch die zungenartigen Abschnitte 1.2.1 bis 1.2.3 und 1.3.1 bis 1.3.3 des ersten Kontaktierbereiches K1, beispielsweise durch Verformen, Risse und/oder Ausbrüche für einen erneuten Fügevorgang unbrauchbar sind.

Die zungenartigen Abschnitte 1.2.1 bis 1.2.3 und 1.3.1 bis 1.3.3 des ersten Kontaktierbereiches K1 weisen nicht näher dargestellte Sollbruchstellen auf, so dass der erste Kontaktierbereich K1 von dem ersten elektrischen Pol 1.2 der Einzelzelle 1 entfernbar ist.

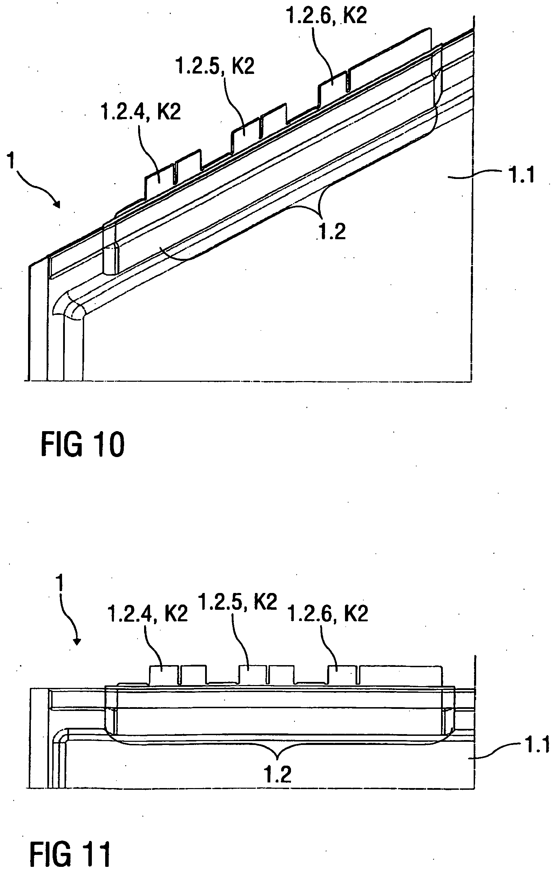

In den Figuren 10 und 11 ist der erste elektrische Pol 1.2 der Einzelzelle 1 mit entferntem erstem Kontaktierbereich K1 dargestellt.

Der erste Kontaktierbereich K1, welcher den ersten, den vierten und den siebenten zungenartigen Abschnitt 1.2.1 bis 1.2.3 umfasst, ist mittels Brechen der Sollbruchstellen von dem ersten elektrischen Pol 1.2 der Einzelzelle 1 entfernt.

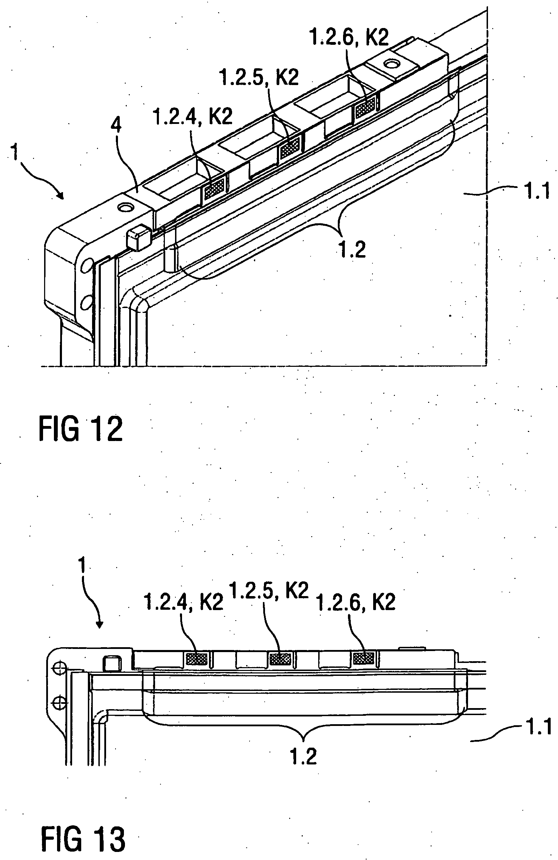

Um die Einzelzelle 1 emeut mittels eines Zellverbinders 4 mit einer benachbarten Einzelzelle 1 elektrisch zu verschalten, wird der zweite Kontaktierbereich K2 der elektrischen Pole 1.2, 1.3 stoffschlüssig mit dem Zellverbinder 4 verbunden, wie in den Figuren 12 und 13 im Detail dargestellt ist.

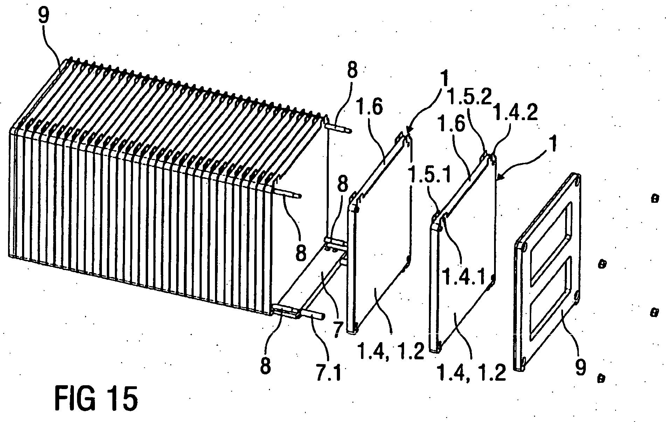

Die Figuren 14 und 15 zeigen jeweils einen mit bipolaren Flachzellen ausgeführten Einzelzellen 1 gebildeten Zellverbund 2. Figur 14 zeigt den Zellverbund 2 in einer perspektivischen Ansicht und Figur 15 zeigt den Zellverbund 2 ebenfalls in einer perspektivischen Ansicht in teilweiser Explosionsdarstellung.

An dem Zellverbund 2 ist bodenseitig eine Wärmeleitplatte 7 angeordnet, mittels welcher eine bei Laden und Entladen der Einzelzellen 1 entstehende Verlustwärme abführbar ist. Die Wärmeleitplatte 7 weist eine nicht näher dargestellte Kanalstruktur auf, welche von einem Kühlmittel oder Klimamittel durchströmbar ist, so dass die der Wärmeleitplatte 7 zugeführte Verlustwärme effizient abführbar ist. Dazu weist die Kanalstruktur eine Einlassöffnung 7.1 und eine Auslassöffnung 7.2 auf.

Der mittels der bipolaren Rahmenflachzellen als Einzelzelle 1 gebildete Zellverbund 2 wird, wie der Zellverbund 2 gemäß den Figuren 1 und 2 mittels stirnseitig angeordneten Druckplatten 9 und Zugankern 8 axial verspannt.

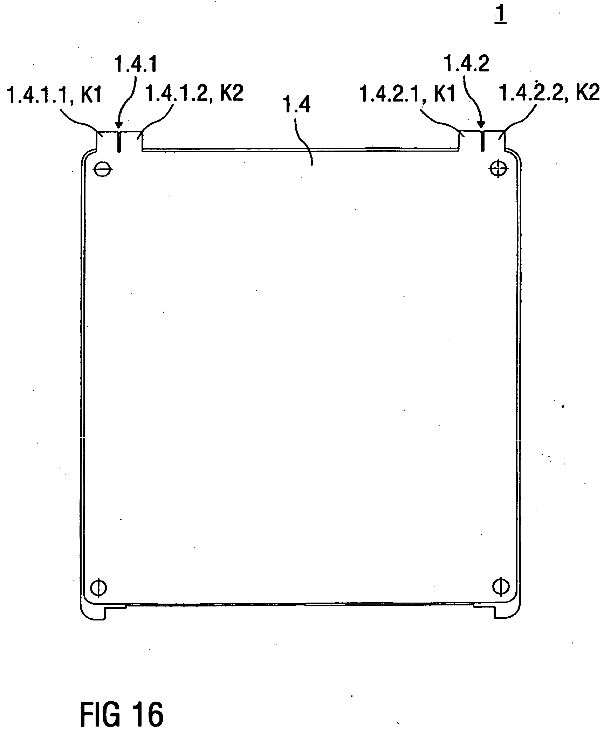

Die Einzelzelle 1 in Form der bipolaren Rahmenflachzelle, welche in Figur 16 dargestellt ist, weist ein metallisches Gehäuse auf, welches aus zwei Hüllblechen 1.4, 1.5 und einen zwischen diesen elektrisch isolierenden Rahmen 1.6 gebildet ist. Dazu ist der Rahmen 1.6 aus einem Kunststoff gebildet.

In dem vorliegenden Ausführungsbeispiel sind die Hüllbleche 1.4, 1.5 planar ausgeführt, wobei zumindest eines der Hüllbleche 1.4, 1.5 auch als schalenförmiges Hüllblech ausgebildet sein kann.

In dem Gehäuse ist ebenfalls eine Elektrodenfolienanordnung 3 in Form eines Elektrodenfolienwickels oder eines Elektrodenfolienstapels angeordnet, wobei jeweils ein Polkontakt 3.1 der Elektrodenfolienanordnung 3 mit einem Hüllblech 1.4, 1.5 verbunden ist, so dass die Hüllbleche 1.4, 1.5 Spannung führen, also jeweils einen elektrischen Pol 1.2, 1.3 der Einzelzelle 1 bilden. Zudem dienen die Hüllbleche 1.4, 1.5 der jeweiligen Einzelzelle 1 als Wärmeleitblech.

An einer Oberseite eines ersten Hüllbleches 1.4 sind zwei fahnenartige Verlängerung 1.4.1, 1.4.2 und an einem zweiten Hüllblech 1.5 sind zwei fahnenartige Verlängerung 1.5.1, 1.5.2 ausgebildet, wobei jeweils eine fahnenartige Verlängerung 1.4.1, 1.4.2, 1.5.1, 1.5.2 zur seriellen elektrischen Verschaltung der Einzelzelle 1 mit einer fahnenartigen Verlängerung 1.4.1, 1.4.2, 1.5.1, 1.5.2 einer benachbarten Einzelzelle 1, beispielsweise mittels Ultraschallschweißens stoffschlüssig verbunden ist.

Erfindungsgemäß ist die jeweilige fahnenartige Verlängerung 1.4.1, 1.4.2, 1.5.1, 1.5.2 in zwei zungenartige Abschnitte 1.4.1.1, 1.4.1.2, 1.4.2.1, 1.4.2.2, 1.5.1.1, 1.5.1.2, 1.5.2.1, 1.5.2.2 als Schweißzungen zur stoffschlüssigen Verbindung unterteilt, so dass hinsichtlich einer fahnenartigen Verlängerungen 1.4.1, 1.4.2 zwei Kontaktierbereiche K1, K2 zur elektrischen Verschaltung gebildet sind.

Auch diese jeweiligen zwei zungenartigen Abschnitte 1.4.1.1, 1.4.1.2, 1.4.2.1, 1.4.2.2, 1.5.1.1, 1.5.1.2, 1.5.2.1, 1.5.2.2 weisen nicht näher dargestellte Sollbruchstellen auf.

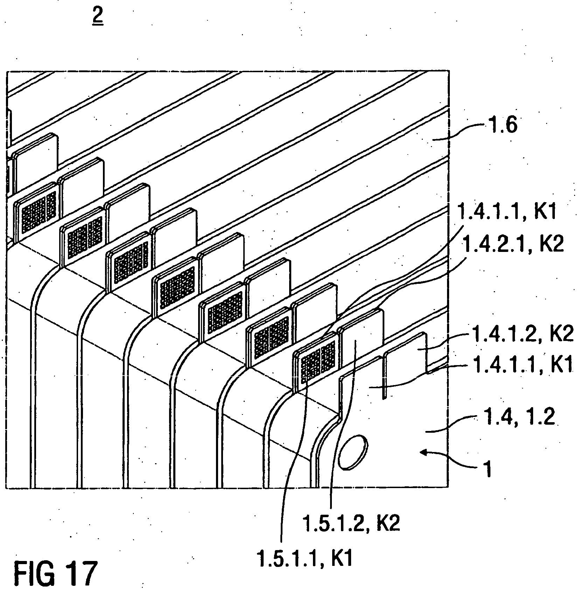

In Figur 17 ist in perspektivischer Ansicht ein vergrößerter Ausschnitt von elektrisch seriell miteinander verschalteten Einzelzellen 1 in Form der bipolaren Rahmenflachzellen dargestellt.

Zur Bildung des Zellverbundes 2 sind die dem ersten Kontaktierbereich K1 zugeordneten fahnenartigen Verlängerungen 1.4.1.1, 1.4.2.1, 1.5.1.1, 1.5.2.1 der Hüllbleche 1.4, 1.5 als elektrischer Pol 1.2, 1.3 einer Einzelzelle 1 mit einem ersten Kontaktierbereich K1 der benachbarten Einzelzelle 1 stoffschlüssig verbunden.

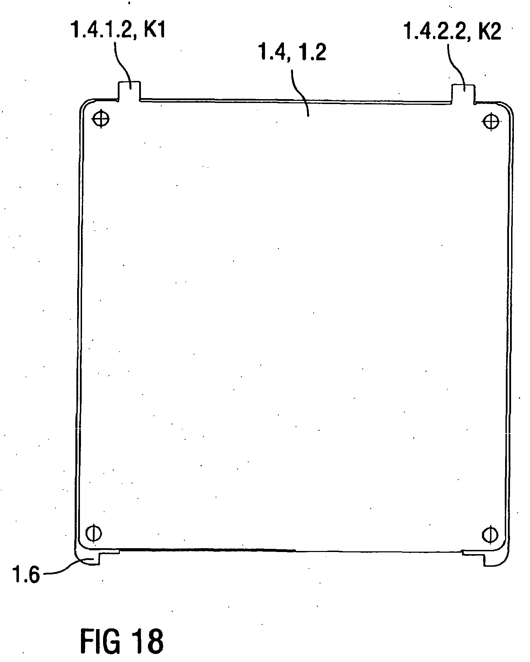

Wird der Zellverbund 2, beispielsweise zur Wartung und/oder zur Reparatur demontiert, wird die stoffschlüssige Verbindung zwischen den ersten Kontaktierbereichen K1 der benachbarten Einzelzellen 1 getrennt, in dem die Sollbruchstelle durch Einwirken einer Kraft versagt und die zungenartigen Abschnitte 1.4.1.1, 1.4.2.1, 1.5.1.1, 1.5.2.1 des ersten Kontaktierbereiches K1 abbrechen, wie am Beispiel einer Einzelzelle 1 in Figur 18 dargestellt ist.

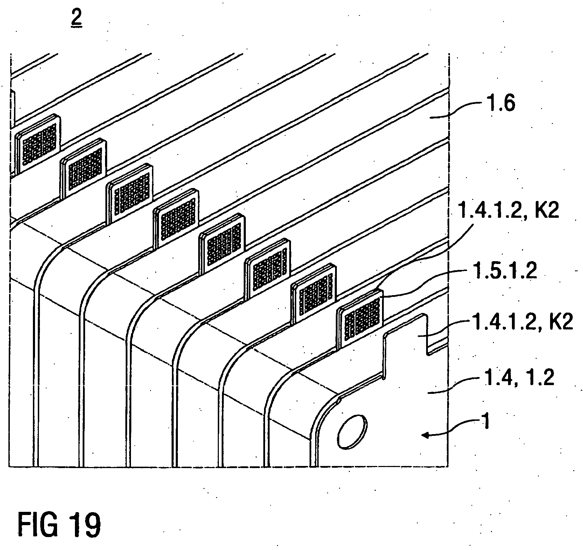

Bei erneuter Montage des Zellverbundes 2 werden die zungenartigen Abschnitte 1.4.1.2, 1.4.2.2, 1.5.1.2, 1.5.2.2 der fahnenartigen Verlängerungen 1.4.1, 1.4.2, 1.5.1, 1.5.2 der Hüllbleche 1.4, 1.5 des zweiten Kontaktierbereiches K2 zur elektrischen Verschaltung benachbarter Einzelzellen 1 mittels Ultraschallschweißens stoffschlüssig miteinander verbunden, was in der Figur 19 näher dargestellt ist.

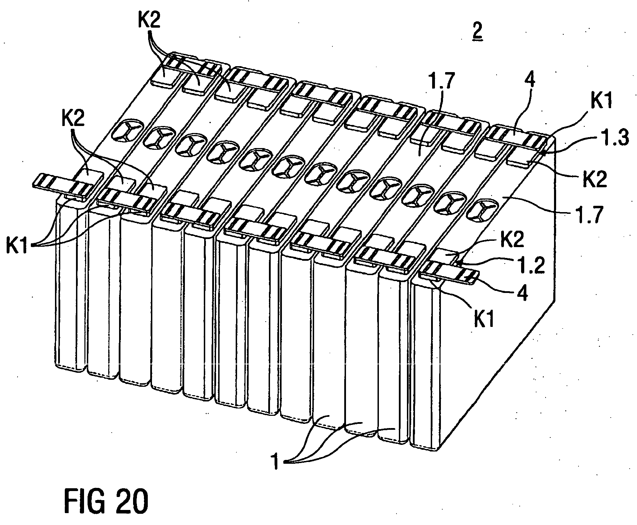

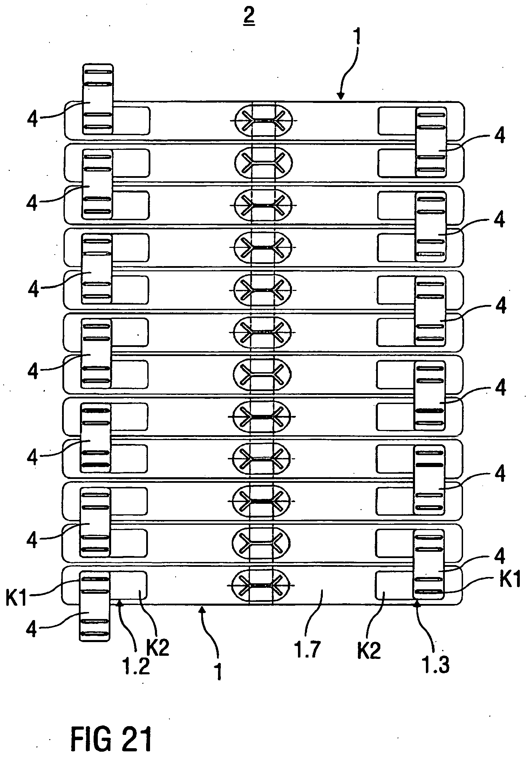

In den Figuren 20 und 21 ist ein Zellverbund, welcher aus Einzelzellen 1 mit einem metallischen Gehäuse gebildet ist, gezeigt. In Figur 20 ist der Zellverbund 2 in einer perspektivischen Ansicht und in Figur 21 in einer Draufsicht gezeigt.

Elektrische Pole 1.2, 1.3 der Einzelzellen 1 sind an einer Oberseite, also an einem Zelldeckel 1.7 der Einzelzelle 1 ausgebildet oder angeordnet.

Zur elektrischen Verschaltung werden die elektrischen Pole 1.2, 1.3 benachbarter Einzelzellen 1 mittels Zellverbindern 4 verbunden, wobei die Zellverbinder 4 mittels Schweißens, insbesondere Laserschweißens im Überlappverfahren stoffschlüssig an den elektrischen Polen 1.2, 1.3 der Einzelzellen 1 befestigt sind. Dazu sind auf den Zellverbindern 4 Kennzeichnungen, insbesondere zur Einbringung von Lasernähten als Montagehilfe aufgebracht.

Die elektrischen Pole 1.2, 1.3 der Einzelzellen 1 sind derart ausgebildet, dass diese zwei nebeneinander angeordnete zueinander redundante Kontaktierbereiche K1, K2 aufweisen. D. h., die elektrischen Pole 1.2, 1.3 der Einzelzellen 1 weisen eine derartige Breite auf, dass zwei Zellverbinder 4 nebeneinander an dem jeweiligen elektrischen Pol 1.2, 1.3 anordbar sind.

Die Zellverbinder 4 sind stegförmig ausgebildet und zur elektrischen Verschaltung benachbarter Einzelzellen 1 senkrecht zur Längsausdehnung der Einzelzellen 1 angeordnet. Dabei weisen die Zellverbinder 4 eine nicht näher dargestellte Sollbruchstelle auf, wobei die Zellverbinder 4 Alternativ oder zusätzlich aus einem Material, welches eine vorgegebene Sprödigkeit aufweist, gebildet sind.

Bei Herstellung des Zellverbundes 2 werden die Zellverbinder 4 an einem ersten Kontaktierbereich K1 der elektrischen Pole 1.2, 1.3 benachbarter Einzelzellen 1 stoffschlüssig befestigt.

Wird eine Einzelzelle 1 aus dem Zellverbund 2 ausgebaut, werden die in den ersten Kontaktierbereichen K1 der elektrischen Pole 1.2, 1.3 der Einzelzelle 1 stoffschlüssig befestigten Zellverbinder 4, beispielsweise an der Sollbruchstelle aufgetrennt. Dabei ist die Sollbruchstelle in einem Bereich des Zellverbinders 4 ausgebildet, welcher zwischen den elektrischen Polen 1.2, 1.3 der benachbarten Einzelzellen 1 angeordnet ist.

Die Zellverbinder 4 der entsprechenden Einzelzelle 1 werden aufgetrennt, wobei Bruchstücke 4.1 des Zellverbinders 4 in dem ersten Kontaktierbereich K1 der elektrischen Pole 1.2, 1.3 der auszutauschenden Einzelzelle 1 sowie der benachbarten Einzelzellen 1 verbleiben.

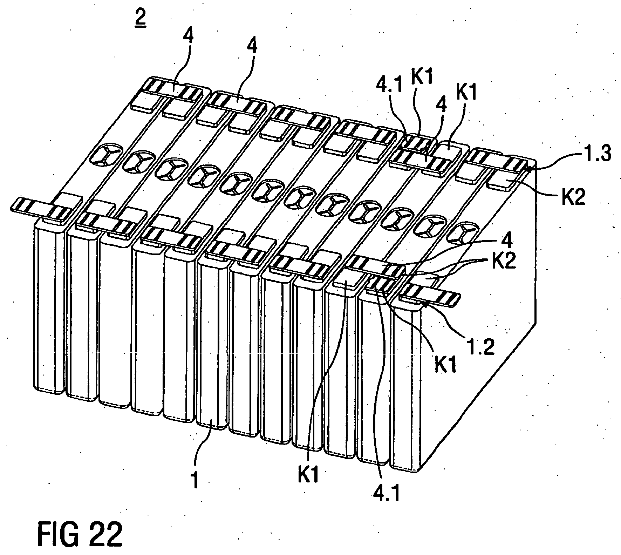

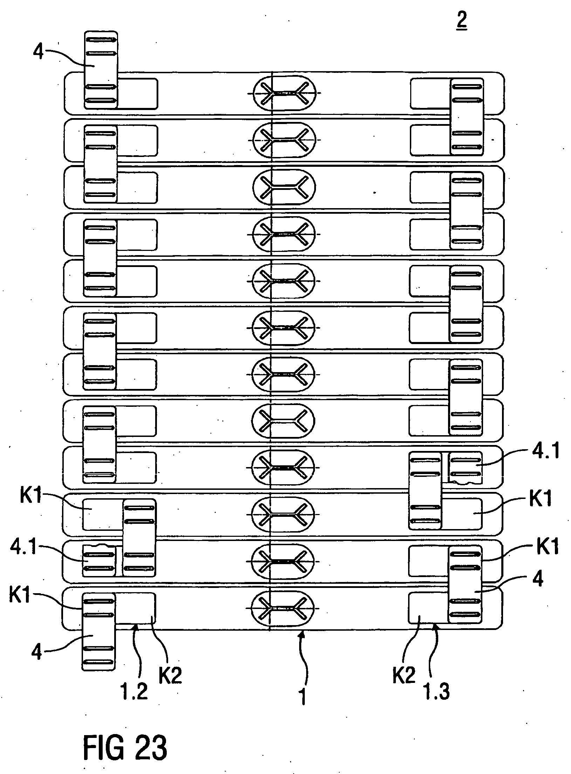

Eine ersetzende Einzelzelle 1 wird innerhalb des Zellverbundes 2 an der freien Position angeordnet, wobei neue Zellverbinder 4 zu elektrischen Verschaltung der Einzelzelle 1 mit den benachbarten Einzelzellen 1 in dem zweiten Kontaktierbereich K2 der elektrischen Pole 1.2, 1.3 der betreffenden Einzelzellen 1 stoffschlüssig befestigt werden, was in den Figuren 22 und 23 gezeigt ist.

Dabei zeigt die Figur 22 den Zellverbund 2 mit der ausgetauschten und mittels des zweiten Kontaktierbereiches K2 elektrisch verschalteten Einzelzelle 1 in einer perspektivischen Ansicht und in Figur 23 den Zellverbund 2 in einer Draufsicht.

Dadurch, dass die Zellverbinder 4 zur Entnahme einer Einzelzelle 1 aufgetrennt werden und die Bruchstücke 4.1 in dem ersten Kontaktierbereich K1 der elektrischen Pole 1.2, 1.3 verbleiben, können Beschädigungen der vergleichsweise empfindlichen elektrischen Pole 1.2, 1.3 der Einzelzellen 1 weitestgehend ausgeschlossen werden.

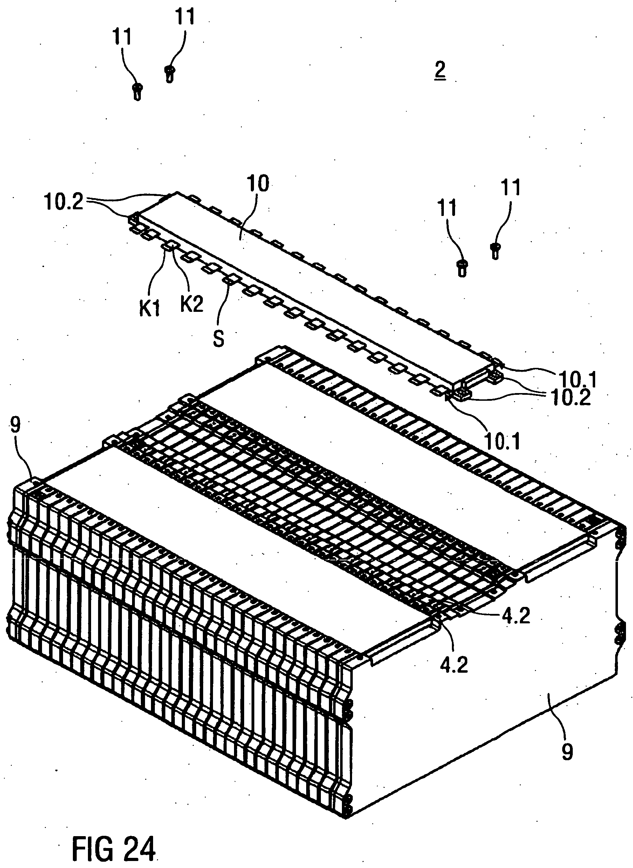

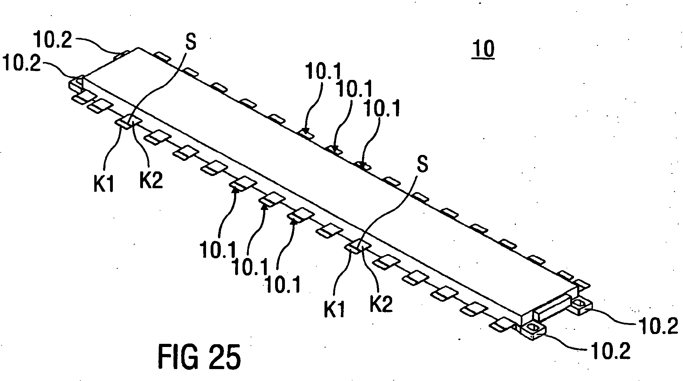

In Figur 24 sind ein Zellverbund 2 mit als Pouchzellen ausgeführten Einzelzellen 1 und eine Batterieüberwachungseinheit 10 perspektivisch in einer Explosionsdarstellung gezeigt, wobei die Batterieüberwachungseinheit 10 als einzelnes Bauteil in Figur 25 dargestellt ist.

Die Batterieüberwachungseinheit 10 weist eine Elektronik auf, die in einem Gehäuse angeordnet ist, wobei die Batterieüberwachungseinheit 10 zur Zellspannungsmessung und zum Ladungsausgleich zwischen den Einzelzellen 1 des Zellverbundes 2 dient. Dazu ist die Batterieüberwachungseinheit 10 unmittelbar oder mittelbar mit jeder Einzelzelle 1 des Zellverbundes 2 gekoppelt.

Die Batterieüberwachungseinheit 10 wird in Bezug auf eine Oberseite des Zellverbundes 2 in Längsausdehnung mittig angeordnet und über Anschlusselemente 10.1 mit den Einzelzellen 1 verbunden. Hierzu weist die Batterieüberwachungseinheit 10 eine vorgebbare Anzahl von stegförmigen Anschlusselementen 10.1 auf, wobei an jeder Seite der Batterieüberwachungseinheit 10 eine Anzahl von Anschlusselementen 10.1 angeordnet oder ausgebildet ist.

Ein Anschlusselement 10.1 der Batterieüberwachungseinheit 10 ist dabei beispielsweise zwei benachbarten Einzelzellen 1 zugeordnet, wobei das jeweilige Anschlusselement 10.1 mittels Punktschweißens an einem Zellverbinder 4 stoffschlüssig befestigt ist. Zusätzlich ist die Batterieüberwachungseinheit 10 über an dieser ausgebildete oder angeordnete Flansche 10.2 an den den Zellverbund 2 abschließenden Druckplatten 9 mittels Schrauben 11 befestigbar.

Die Anschlusselemente 10.1 weisen jeweils zwei Kontaktierbereiche K1, K2 auf, die mittels einer in das jeweilige Anschlusselement 10.1 eingebrachten Sollbruchstelle S voneinander separiert sind. Dabei verläuft die Sollbruchstelle S senkrecht zur Längsausdehnung des jeweiligen Anschlusselementes 10.1.

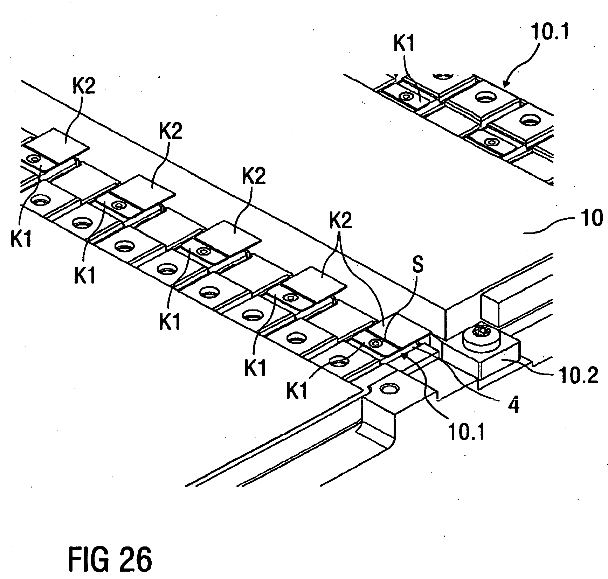

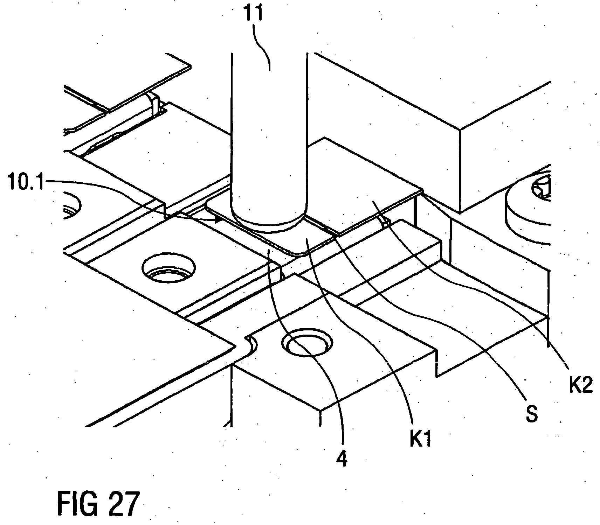

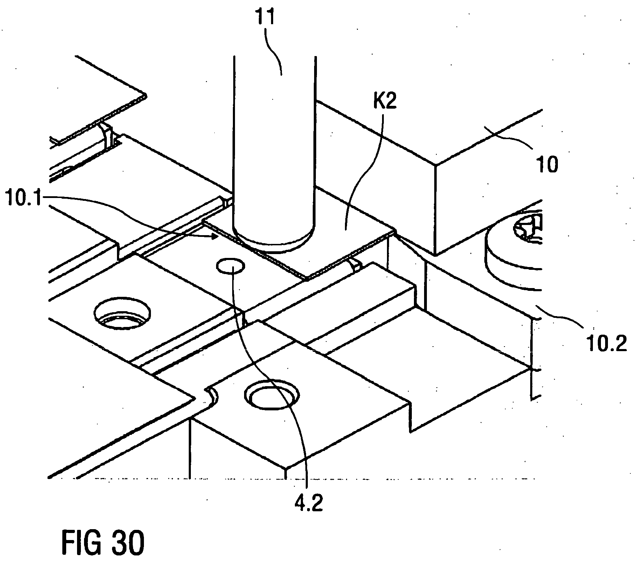

Bei Anordnung der Batterieüberwachungseinheit 10 werden die Anschlusselemente 10.1 mittels ihres ersten Kontaktierbereiches K1 stoffschlüssig an den Zellverbindern 4 befestigt, was in den Figuren 26 und 27 näher dargestellt ist. Zur stoffschlüssigen Befestigung mittels Punktschweißens wird eine Elektrode 11 in den Figuren 27 und 30 eingesetzt, wobei eine Rückleitung eines Schweißstromes über eine zweite nicht näher dargestellte Elektrode erfolgt.

An den Zellverbindern 4 sind in einem den Kontaktierbereichen K1, K2 der Anschlusselemente 10.1 zugeordneten Bereich jeweils zwei in Figur 24 gezeigte noppenförmige Erhebungen 4.2 als Schweißpunkte zur Einstellung eines definierten Strompfades zwischen Zellverbinder 4 und Anschlusselement 10.1 ausgebildet. Die jeweiligen zwei noppenförmigen Erhebungen 4.2 sind hinsichtlich der Längsausdehnung der Zellverbinder 4 hintereinander angeordnet, so dass eine noppenförmige Erhebung 4.2 in Bezug auf den Zellverbund 2 weiter außen als eine weitere noppenförmige Erhebung 4.2 ausgebildet ist.

Dabei wird der erste Kontaktierbereich K1 des jeweiligen Anschlusselementes 10.1 bei Montage der Batterieüberwachungseinheit 10 an dem Zellverbund 2 an einer noppenförmigen Erhebung 4.2 stoffschlüssig befestigt ist.

Alternativ dazu sind die noppenförmigen Erhebungen 4.2 an den Anschlusselementen 10.1 ausgebildet.

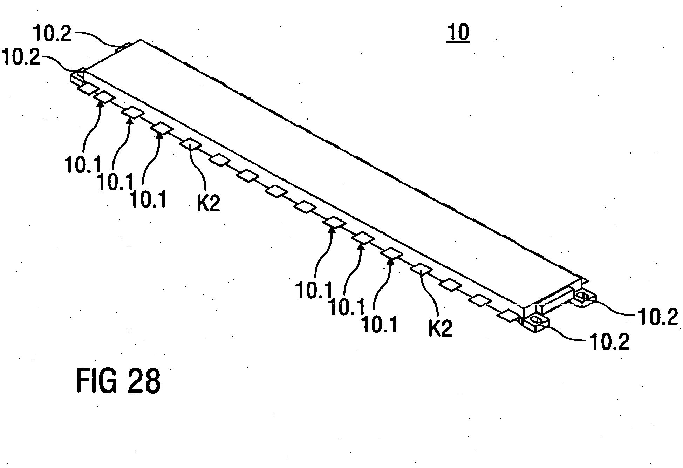

Zur Entnahme der Batterieüberwachungseinheit 10 werden die die Kontaktierbereiche K1, K2 separierenden Sollbruchstellen S an den Anschlusselementen 10.1, beispielsweise mit Hilfe eines Niederhalters aufgebrochen und der erste Kontaktierbereich K1 wird von dem Anschlusselement 10.1 entfernt, so dass die Anschlusselemente 10.1 nur noch den zweiten Kontaktierbereich K2 aufweisen, wie in Figur 28 gezeigt. Die ersten Kontaktierbereiche K1 der Anschlusselemente 10.1 werden bevorzugt von dem jeweiligen Zellverbinder 4 entfernt.

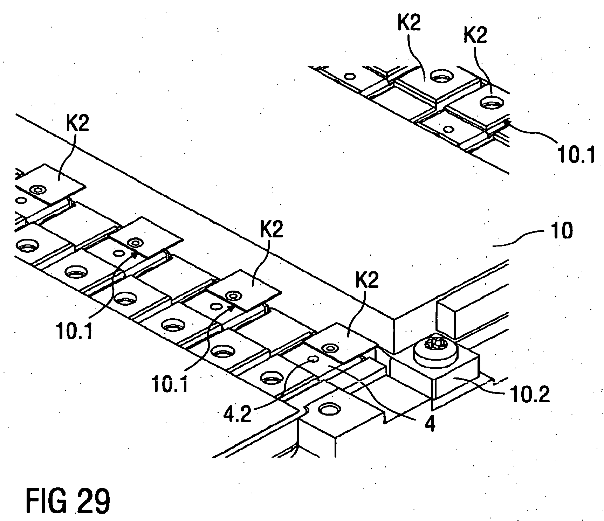

Wird die Batterieüberwachungseinheit 10, beispielsweise nach einer Reparatur nochmals an dem Zellverbund 2 angeordnet, wie in Figur 29 gezeigt ist, werden zur stoffschlüssigen Befestigung an den Zellverbindern 4 die zweiten Kontaktierbereiche K2 der Anschlusselemente 10.1 genutzt.

Im Bereich des jeweiligen ersten Kontaktierbereiches K1 verbleibt ein Rest der noppenförmigen Erhebungen 4.2 als Schweißpunkte an dem Zellverbinder 4.

Wird eine neue Batterieüberwachungseinheit 10 an dem Zellverbund 2 angeordnet, so werden die Anschlusselemente 10.1 mit ihrem ersten Kontaktierbereich K1 an den weiter innenliegenden noppenförmigen Erhebungen 4.2 stoffschlüssig befestigt.

In Figur 30 ist eine mittels der Elektrode 11 durchgeführte stoffschlüssige Befestigung der zweiten Kontaktierbereiche K2 der Anschlusselemente 10.1 der Batterieüberwachungseinheit 10 an den Zellverbindern 4 in einem vergrößerten Ausschnitt dargestellt.

### Bezugszeichenliste

- 1: Einzelzelle
- 1.1: Kunststoffhülle
- 1.2: erster elektrischer Pol
- 1.2.1: zungenartiger Abschnitt
- 1.2.2: zungenartiger Abschnitt
- 1.2.3: zungenartiger Abschnitt
- 1.2.4: zungenartiger Abschnitt
- 1.2.5: zungenartiger Abschnitt
- 1.2.6: zungenartiger Abschnitt
- 1.3: zweiter elektrischer Pol
- 1.3.1: zungenartiger Abschnitt
- 1.3.2: zungenartiger Abschnitt
- 1.3.3: zungenartiger Abschnitt
- 1.3.4: zungenartiger Abschnitt
- 1.3.5: zungenartiger Abschnitt
- 1.3.6: zungenartiger Abschnitt
- 1.4: erstes Hüllblech
- 1.4.1: fahnenartige Verlängerung
- 1.4.1.1: zungenartiger Abschnitt
- 1.4.1.2: zungenartiger Abschnitt
- 1.4.2: fahnenartige Verlängerung
- 1.4.2.1: zungenartiger Abschnitt
- 1.4.2.2: zungenartiger Abschnitt
- 1.5: zweites Hüllblech
- 1.5.1: fahnenartige Verlängerung
- 1.5.1.1: zungenartiger Abschnitt
- 1.5.1.2: zungenartiger Abschnitt
- 1.5.2: fahnenartige Verlängerung
- 1.5.2.1: zungenartiger Abschnitt
- 1.5.2.2: zungenartiger Abschnitt
- 1.6: Rahmen
- 1.7: Zelldeckel
- 2: Zellverbund
- 3: Elektrodenfolienanordnung
- 3.1: Polkontakt
- 4: Zellverbinder
- 4.1: Bruchstück
- 4.2: noppenförmige Erhebung
- 5: Ultraschallschweißwerkzeug
- 5.1: Sonotrode
- 5.2: Amboss
- 6: Halterahmen
- 7: Wärmeleitplatte
- 7.1: Einlassöffnung
- 7.2: Auslassöffnung
- 8: Zuganker
- 9: Druckplatte
- 10: Batterieüberwachungseinheit
- 10.1: Anschlusselement
- 10.2: Flansch
- 11: Elektrode; Schraube
- K1: erster Kontaktierbereich
- K2: zweiter Kontaktierbereich
- S: Sollbruchstelle

## Patentansprüche

1. Batterie, umfassend eine Anzahl von seriell und/oder parallel miteinander verschalteten Einzelzellen (1), wobei deren elektrische Pole (1.2, 1.3) zur elektrischen Verschaltung direkt oder mittels Zellverbindem (4) form- und/oder stoffschlüssig miteinander verbunden sind, und eine Batterieüberwachungseinheit (10), welche mit den elektrischen Polen (1.2, 1.3) und/oder mit den Zellverbindern (4) form- und/oder stoffschlüssig verbunden ist, **dadurch gekennzeichnet, dass** die elektrischen Pole (1.2, 1.3) der Einzelzellen (1) jeweils mehrere-zueinander redundante Kontaktierbereiche (K1, K2) zur form- und/oder stoffschlüssigen Verbindung aufweisen, wobei die redundanten Kontaktierbereiche (K1, K2) als zungenartige Abschnitte (1.2.1 bis 1.2.3 und 1.3.1 bis 1.3.3 sowie 1.2.4 bis 1.2.6 und 1.3.4 bis 1.3.6) ausgebildet sind, wobei der jeweilige zungenartige Abschnitt (1.2.1 bis 1.2.3 und 1.3.1 bis 1.3.3 sowie 1.2.4 bis 1.2.6 und 1.3.4 bis 1.3.6) eine Sollbruchstelle aufweist und wobei jeweils nur einer der zueinander redundanten Kontaktierbereiche (K1, K2) form-und/oder stoffschlüssig verbunden ist.

2. Batterie nach Anspruch 1,
**dadurch gekennzeichnet, dass**
die jeweiligen zueinander redundanten Kontaktierbereiche (K1, K2) separiert ausgebildet sind.

3. Batterie nach einem der vorhergehenden Ansprüche,
**dadurch gekennzeichnet, dass**
der jeweilige elektrische Pol (1.2, 1.3) eine derartige Breite aufweist, dass zumindest zwei zueinander redundante Kontaktierbereiche (K1, K2) nebeneinander ausgebildet sind, wobei in jeweils einem Kontaktierbereich (K1, K2) ein Zellverbinder (4) form- und/oder stoffschlüssig befestigbar ist.

4. Batterie nach einem der vorhergehenden Ansprüche,
**dadurch gekennzeichnet, dass**
der Zellverbinder (4) eine Sollbruchstelle aufweist.

5. Batterie nach einem der vorhergehenden Ansprüche,
**dadurch gekennzeichnet, dass**
der Zellverbinder (4) aus einem Material gebildet ist, welches eine vorgegebene Sprödigkeit aufweist.

6. Batterie nach einem der vorhergehenden Ansprüche,
**dadurch gekennzeichnet, dass**
ein an der Batterieüberwachungseinheit (10) angeordnetes Anschlusselement (10.1) zur Verbindung mit einem Zellverbinder (4) und/oder einem elektrischen Pol (1.2, 1.3) der Einzelzelle (1) zumindest zwei nebeneinander angeordnete zueinander redundante Kontaktierbereiche (K1, K2) aufweist, welche mittels einer Sollbruchstelle (S) voneinander getrennt sind.

7. Verfahren zur Wartung, Reparatur und/oder Optimierung einer Batterie nach einem der Ansprüche 1 bis 6 8, welche als Komponenten eine Anzahl von seriell und/oder parallel miteinander verschalteten Einzelzellen (1), deren elektrische Pole (1.2, 1.3) zur elektrischen Verschaltung direkt oder mittels Zellverbindern (4) form- und/oder stoffschlüssig miteinander verbunden sind, und eine Batterieüberwachungseinheit (10), welche mit den elektrischen Polen (1.2, 1.3) und/oder mit den Zellverbindern (4) form- und/oder stoffschlüssig verbunden ist,
aufweist,
**dadurch gekennzeichnet, dass** zum Austausch einer Komponente die form- und/oder stoffschlüssige Verbindung des Kontaktierbereiches (K1, K2) der nicht auszutauschenden Komponente, über welche die auszutauschende und die nicht auszutauschende Komponente elektrisch miteinander kontaktiert sind, durch Zerstörung getrennt wird und eine Ersatzkomponente mit einem zu dem zerstörten Kontaktierbereich (K1, K2) redundanten Kontaktierbereich (K1, K2) form- und/oder stoffschlüssig verbunden wird, und/oder dass eine fehlerhafte form- und/oder stoffschlüssige Verbindung zweier Kontaktierbereiche (K1, K2) durch eine form- und/oder stoffschlüssige Verbindun zweier dazu redundanter Kontaktierbereiche (K1, K2) ersetzt wird.

8. Verfahren nach Anspruch 7 9,
**dadurch gekennzeichnet, dass**
die Ersatzkomponente mit dem redundanten Kontaktierbereich (K1, K2) mittels Schweißens, Toxens, Clinchens, Crimpens und/oder Nietens stoff- und/oder formschlüssig verbunden wird.

## Claims

1. Battery, comprising a number of series- and/or parallel-connected individual cells (1), their electric terminal posts (1.2, 1.3) being connected to one another positively and/or by adhesive force either directly or by means of cell connectors (4) for electric interconnection, and further comprising a battery monitoring unit (10) connected to the electric terminal posts (1.2, 1.3) and/or to the cell connectors (4) positively and/or by adhesive force,
**characterised in that**
each of the terminal posts (1.2, 1.3) of the individual cells (1) has a plurality of mutually redundant contacting regions (K1, K2) for positive connection or connection by adhesive force, wherein the redundant contacting regions (K1, K2) are designed as blade-type sections (1.2.1 to 1.2.3 and 1.3.1 to 1.3.3 as well as 1.2.4 to 1.2.6 and 1.3.4 to 1.3.6), each of the blade-type sections (1.2.1 to 1.2.3 and 1.3.1 to 1.3.3 as well as 1.2.4 to 1.2.6 and 1.3.4 to 1.3.6) having a predetermined breaking point and in each case only one of the mutually redundant contacting regions (K1, K2) being connected positively and/or by adhesive force.

2. Battery according to claim 1,
**characterised in that**
the respective mutually redundant contacting regions (K1, K2) are designed to be separate.

3. Battery according to any of the preceding claims,
**characterised in that**
the respective electric terminal post (1.2, 1.3) has such a width that at least two mutually redundant contacting regions (K1, K2) are formed adjacent to one another, wherein a cell connector (4) can be secured positively and/or by adhesive force in a contacting region (K1, K2) each.

4. Battery according to any of the preceding claims,
**characterised in that**
the cell connector (4) has a predetermined breaking point.

5. Battery according to any of the preceding claims,
**characterised in that**
the cell connector (4) is made of a material having a predetermined brittleness.

6. Battery according to any of the preceding claims,
**characterised in that**
a connecting element (10.1) located on the battery monitoring unit (10) for connection to a cell connector (4) and/or to an electric terminal post (1.2, 1.3) of the individual cell (1) has at least two mutually redundant contacting regions (K1, K2) arranged adjacent to one another, which are separated by means of a predetermined breaking point (S).

7. Method for the maintenance, repair and/or optimisation of a battery according to any of claims 1 to 6, the components of which are a number of series- and/or parallel-connected individual cells (1), their electric terminal posts (1.2, 1.3) being connected to one another positively and/or by adhesive force either directly or by means of cell connectors (4) for electric interconnection, and a battery monitoring unit (10) connected to the electric terminal posts (1.2, 1.3) and/or to the cell connectors (4) positively and/or by adhesive force,
**characterised in that**
for the replacement of a component, the positive connection and/or the connection by adhesive force of the contacting region (K1, K2) of the component not to be replaced, by way of which the component to be replaced and the component not to be replaced are contacted to one another, is/are broken by destruction and a replacement component is connected positively and/or by adhesive force to a contacting region (K1, K2) redundant to the destroyed contacting region (K1, K2), and/or **in that** a faulty positive connection and/or connection by adhesive force of two contacting regions (K1, K2) is/are replaced by a positive connection and/or connection by adhesive force of two contacting regions (K1, K2) which are redundant in respect thereof.

8. Method according to claim 7,
**characterised in that**
the replacement component with the redundant contacting region (K1, K2) is connected positively or by adhesive force by means of welding, toxing, clinching, crimping and/or riveting.

## Revendications

1. Batterie comprenant une pluralité d'éléments individuels (1) connectés les uns aux autres en parallèle et/ou en série, leurs pôles électriques (1.2, 1.3) étant reliés par liaison de matière et/ou par complémentarité de forme pour la connexion électrique directe ou à l'aide de connecteurs (4) d'élément et sont reliés les uns aux autres par une liaison de matière, et une unité (10) de surveillance de batterie qui est reliée aux pôles électriques (1.2, 1.3) et/ou aux connecteurs (4) d'élément par liaison de forme et/ou par liaison de matière, **caractérisée en ce que** les pôles électriques (1.2, 1.3) des éléments individuels (1) présentent respectivement des zones de contact (K1, K2) redondantes les unes avec les autres pour la liaison de matière et/ou de forme, les zones de contact (K1, K2) redondantes étant conçues comme des sections (de 1.2.1 à 1.2.3 et de 1.3.1 à 1.3.3 et de 1.2.4 à 1.2.6 et de 1.3.4 à 1.3.6) en forme de languettes la section respective (de 1.2.1 à 1.2.3 et de 1.3.1 à 1.3.3 et de 1.2.4 à 1.2.6 et de 1.3.4 à 1.3.6) en forme de languette présentant un point destiné à la rupture et respectivement uniquement l'une des zones de contact redondantes les unes avec les autres (K1, K2) étant reliée par liaison de forme et/ou par liaison de matière.

2. Batterie selon la revendication 1, **caractérisé en ce que** les zones de contact (K1, K2) respectives redondantes les unes avec les autres sont séparées et/ou peuvent être séparables.

3. Batterie selon l'une quelconque des revendications précédentes **caractérisée en ce que** le pôle électrique respectif (1.2, 1.3) présente une telle largeur qu'au moins deux zones de contact (K1, K2) redondantes sont adjacentes, dans chaque zone de contact (K1, K2) respective pouvant se fixer un connecteur (4) d'élément par liaison de forme et/ou par liaison de matière.

4. Batterie selon l'une quelconque des revendications précédentes, **caractérisé en ce que** le connecteur (4) d'élément présente un point destiné à la rupture.

5. Batterie selon l'une quelconque des revendications précédentes, **caractérisé en ce que** le connecteur (4) d'élément est constitué d'un matériau qui présente une fragilité prédéfinie.

6. Batterie selon l'une quelconque des revendications précédentes, **caractérisée en ce qu'**un élément de connexion (10.1) disposé sur l'unité (10) de surveillance de batterie présente au moins deux zones de contact (K1, K2) redondantes une avec l'autre, adjacentes pour la connexion à un connecteur (4) d'élément et/ou un pôle (1.2, 1.3) électrique, lesdites zones de contact étant séparées l'une de l'autre au moyen d'un point (S) destiné à la rupture.

7. Procédé d'entretien, de réparation et/ou d'optimisation d'une batterie selon l'une quelconque des revendications 1 à 6, laquelle présente en tant que composants une pluralité d'éléments individuels (1) raccordés les uns aux autres en parallèle et/ou en série, dont les pôles électriques (1.2, 1.3) sont reliés par liaison de matière et/ou par complémentarité de forme pour le raccordement électrique direct ou à l'aide de connecteurs (4) d'élément et une unité (10) de surveillance de batterie qui est reliée aux pôles électriques (1.2, 1.3) et/ou aux connecteurs (4) d'élément par liaison de forme et/ou par liaison de matière, **caractérisé en ce que** pour le remplacement d'un composant la liaison de la zone de contact (K1, K2) par liaison de matière et/ou par liaison de forme du composant ne devant pas être replacé, au moyen de laquelle le composant à remplacer et l'élément à ne pas remplacer sont en contact électrique l'un avec l'autre, est séparée par destruction et un composant de remplacement est relié à la zone de contact redondante avec la zone de contact détruite (K1, K2) et/ou en ce qu'une liaison défectueuse par liaison de forme et/ou par liaison de matière de deux zones de contact (K1, K2) remplace par une liaison de forme et/ou par liaison de matière des deux zones de contact (K1, K2) redondantes.

8. Procédé selon la revendication 7, **caractérisé en ce que** le composant de remplacement est relié par liaison de forme et/ou de matière à la zone de contact redondante (K1, K2) par soudage, toxage, clinchage, sertissage et/ou rivetage.
